# EUROPEAN PATENT APPLICATION

(11) **EP 4 438 459 A1**
(43) Date of publication of application: **02.10.2024**
(21) Application number: 24161660.6
(22) Date of filing: 06.03.2024
(51) Int. Cl.: B63B 59/08, A01K 63/10, E04H 4/16

(54) **UNDERWATER CLEANING-WORK APPARATUS**

(30) Priority: 24.03.2023 JP 2023047653
(71) Applicant: Yanmar Holdings Co., Ltd., Osaka-shi, Osaka (JP)
(72) Inventor: WAKUTA, Kensaku, Kunisaki-shi (JP)
(74) Representative: Dennemeyer & Associates S.A.

(57) **Abstract**

[Problem] To provide an art capable of improving operability of an underwater cleaning-work apparatus for cleaning a cleaning target under water.

[Solution] An exemplary underwater cleaning-work apparatus includes a main-body portion, a cleaning portion which is disposed below the main-body portion, and a thruster disposed at a position shifted from the cleaning portion on a plan view.

## Description

### TECHNICAL FIELD

The present invention relates to an underwater cleaning-work apparatus.

### BACKGROUND ART

Conventionally, an underwater cleaning-work machine that removes shellfish, seaweeds and the like attached to a seawater immersion surface of a ship is known (for example, see Patent Document 1).

The underwater cleaning-work machine in Patent Document 1 includes a cleaning nozzle unit and a propulsive-force generating propeller. The cleaning nozzle unit injects high-pressure water toward a cleaning target and cleans the cleaning target by the jet flow. The cleaning nozzle unit includes a disk-shaped cleaning body fixed to a lower end of a rotary shaft, and a plurality of cleaning nozzles provided on an outer peripheral part of the cleaning body. The propulsive-force generating propeller is fixed to an upper end of the rotary shaft to which the cleaning body is fixed. When high-pressure water for generating a jet flow for cleaning is injected from the cleaning nozzle, the propulsive-force generating propeller is rotated together with the cleaning nozzle unit by a reaction force. Rotation of the propulsive-force generating propeller generates a propulsive force for pressing the underwater cleaning-work machine against the cleaning target.

### PRIOR ART DOCUMENT

### PATENT DOCUMENT

Patent Document 1: Japanese Patent No. 7049279

### SUMMARY OF INVENTION

### TECHNICAL PROBLEM

In Patent Document 1, the cleaning nozzle unit and the propulsive-force generating propeller are provided coaxially. Therefore, a height of the underwater cleaning-work machine was increased, and operability under water was not necessarily good.

An object of the present invention is to provide an art capable of improving the operability of an underwater cleaning-work apparatus for cleaning a cleaning target under water.

### SOLUTION TO PROBLEM

An exemplary underwater cleaning-work apparatus according to the present invention includes a main-body portion, a cleaning portion which is disposed below the main-body portion, and a thruster disposed at a position shifted from the cleaning portion on a plan view.

### ADVANTAGEOUS EFFECTS OF INVENTION

According to the exemplary present invention, operability of the underwater cleaning-work apparatus which cleans a cleaning target under water can be improved.

### BRIEF DESCRIPTION OF DRAWINGS

FIG. 1 is a block diagram showing a schematic configuration of an underwater cleaning-work system;
FIG. 2 is a perspective view showing a schematic configuration of an underwater cleaning-work apparatus;
FIG. 3 is a schematic perspective view of the underwater cleaning-work apparatus viewed from a direction different from that in FIG. 1;
FIG. 4 is a schematic perspective view showing a state where some of cover members are removed from the underwater cleaning-work apparatus shown in FIG. 1;
FIG. 5 is a perspective view showing a schematic configuration of a frame portion included in the underwater cleaning-work apparatus;
FIG. 6 is a side view showing a schematic configuration of a main-body cover included in the underwater cleaning-work apparatus;
FIG. 7 is a front view showing a schematic configuration of the main-body cover included in the underwater cleaning-work apparatus;
FIG. 8 is a perspective view showing a schematic configuration of a thruster included in the underwater cleaning-work apparatus;
FIG. 9 is a view of a thruster main-body and a propeller portion shown in FIG. 8 as viewed along a direction in which an axis extends;
FIG. 10 is a perspective view showing a schematic configuration of a cleaning disk included in the cleaning portion;
FIG. 11 is a sectional perspective view showing a vertical section of the cleaning disk shown in FIG. 10;
FIG. 12 is a front view showing a relationship between a roller and the cleaning disk;
FIG. 13 is a plan view showing a schematic configuration of a cleaning-portion cover included in the underwater cleaning-work apparatus;
FIG. 14 is a schematic bottom view showing the relationship between the cleaning-portion cover and the two cleaning disks;
FIG. 15 is a cross-sectional view of the cleaning-portion cover shown in FIG. 13 cut along a XV-XV position;
FIG. 16 is a perspective view showing a schematic configuration of an elastic member included in the cleaning-portion cover; and
FIG. 17 is an enlarged view of a part surrounded by a broken line in FIG. 15.

### DESCRIPTION OF EMBODIMENTS

Hereinafter, an exemplary embodiment of the present invention will be described in detail with reference to the drawings. Directions in the description of the underwater cleaning-work apparatus are based on an xyz coordinate system which is a three-dimensional orthogonal coordinate system shown in the drawings. In the following, in the xyz coordinate system, an x-direction is a front-rear direction, a y-direction is a left-right direction, and a z-direction is an up-down direction. A +x side shall be a front side, and a -x side as a rear side. A +y side shall be a left side, and a -y side as a right side. When viewed from the rear to the front, the left side is the left side, and the right side is the right side. A +z side shall be an upper side, and a -z side as a lower side. It is to be noted that these directions are merely names used for description and are not intended to limit actual positional relationship and directions.

### <1. UNDERWATER CLEANING-WORK SYSTEM>

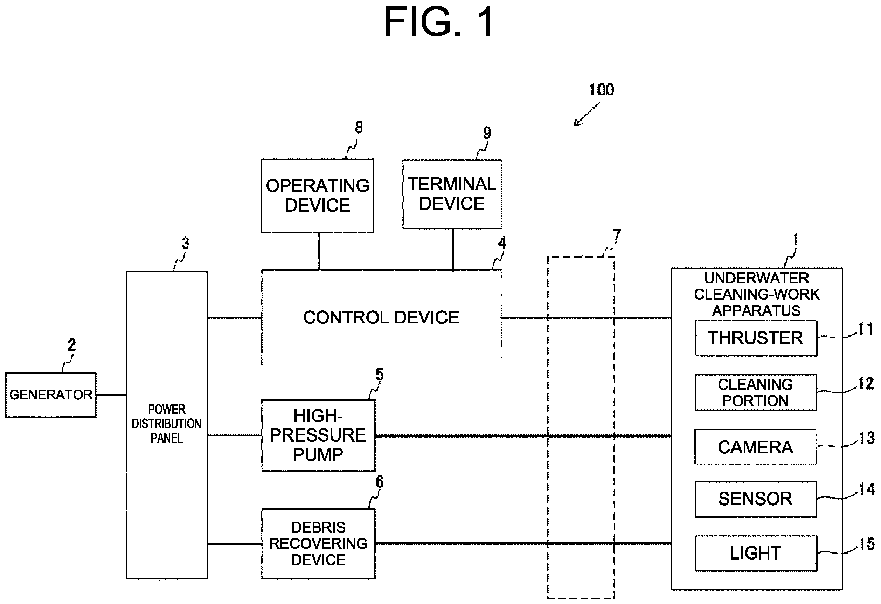

First, an outline of an underwater cleaning-work system 100 including an underwater cleaning-work apparatus 1 according to an Embodiment of the present invention will be described. FIG. 1 is a block diagram illustrating a schematic configuration of the underwater cleaning-work system 100 according to the Embodiment of the present invention. It is to be noted that, in FIG. 1, a thin solid line connecting blocks means an electric wiring. The electric wiring is shown as one line for convenience even when the number of lines is plural. Moreover, in FIG. 1, a thick solid line connecting the blocks means a hose.

As shown in FIG. 1, the underwater cleaning-work system 100 includes a generator 2, a power distribution panel 3, a control device 4, a high-pressure pump 5, a debris recovering device 6, a reel 7, an operating device 8, and a terminal device 9 in addition to an underwater cleaning-work apparatus 1.

The underwater cleaning-work apparatus 1 cleans a cleaning target while moving under water. The cleaning targets are, for example, a hull, a bridge pier, a swimming pool, or a farmed fish net and the like. Since details of the underwater cleaning-work apparatus 1 will be described later, the configuration of the underwater cleaning-work apparatus 1 will be briefly described here. As shown in FIG. 1, the underwater cleaning-work apparatus 1 includes a thruster 11, a cleaning portion 12, a camera 13, a sensor 14, and a light 15.

The thruster 11 applies a propulsive force. The underwater cleaning-work apparatus 1 can swim under water by using the thruster 11. The cleaning portion 12 enables cleaning of a cleaning target. In this Embodiment, the cleaning portion 12 cleans the cleaning target by injecting high-pressure water. Specifically, the cleaning portion 12 cleans the cleaning target by using the jet flow generated by injecting the high-pressure water. However, the cleaning portion 12 is not limited to a method of injecting the high-pressure water and may be configured to clean the cleaning target by using a brush, for example. The camera 13 photographs a surrounding environment of the underwater cleaning-work apparatus 1.

The sensor 14 is disposed to monitor a state of the underwater cleaning-work apparatus 1. The sensor 14 may be one type but includes a plurality of types of sensors in this Embodiment. The sensor 14 includes a pressure sensor, an inertial measurement unit (IMU), a temperature sensor and the like, for example. The pressure sensor can detect a water depth at a position where the underwater cleaning-work apparatus 1 is located. The IMU can detect a posture of the underwater cleaning-work apparatus 1. The temperature sensor can detect an abnormality of the thruster 11. The light 15 illuminates surroundings of the underwater cleaning-work apparatus 1 so that states of the cleaning target present under water before and after the cleaning can be checked, for example.

The generator 2, the power distribution panel 3, the control device 4, the high-pressure pump 5, the debris recovering device 6, the reel 7, the operating device 8, and the terminal device 9 are disposed on board or on land. On board may be on board a ship (work ship) for cleaning work in detail. Further, the land may include a place on a moving body such as a vehicle moving on land, for example.

The generator 2 generates electric power by driving a power source such as an engine, for example. The power distribution panel 3 distributes electric power generated by the generator 2 to the control device 4, the high-pressure pump 5, the debris recovering device 6, and the like.

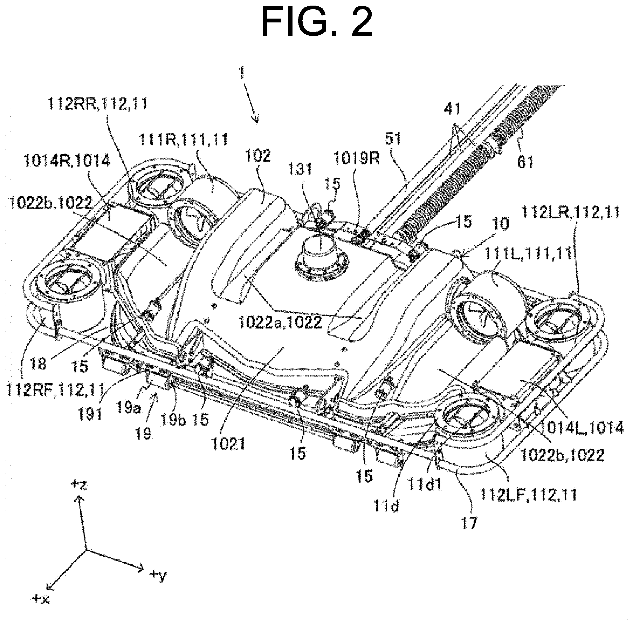

The control device 4 generates an operation instruction for the thruster 11 in response to an instruction from the operating device 8. It is to be noted that, when the number of the thrusters 11 is plural, an operation instruction is generated for each of the thrusters. The thruster 11 is supplied with electric power corresponding to the operation instruction via an electric cable 41 (see FIG. 2 described later) and is driven by the electric power. It is to be noted that the operating device 8 is operated by an operator on a ship or on land. As shown in FIG. 1, the operating device 8 may be configured to communicate with the control device 4 by being connected to the control device 4 in a wired manner but may be configured to communicate with the control device 4 in a wireless manner. That is, the operating device 8 may be a portable device.

Further, the control device 4 acquires photographing information photographed by the camera 13 and sensor information detected by the sensor 14 from the underwater cleaning-work apparatus 1 via the electric cable 41. The control device 4 outputs the acquired photographing information, sensor information, and the like to the terminal device 9. The terminal device 9 includes an information processing device such as a personal computer and a display device such as a liquid crystal monitor, for example. The display device included in the terminal device 9 displays information such as the photographing information by the camera 13 and a water depth acquired by the sensor 14 and the like. An operator on a ship or on land operates the underwater cleaning-work apparatus 1 by using the operating device 8 while viewing the information displayed on the display device.

The high-pressure pump 5 is a motor-driven type pump, for example. The high-pressure pump 5 is a plunger pump, for example. The high-pressure pump 5 supplies high-pressure water to the cleaning portion 12 of the underwater cleaning-work apparatus 1 via a high-pressure water hose 51 (see FIG. 2 described later). The cleaning portion 12 injects the supplied high-pressure water and cleans the cleaning target by using the jet flow.

The debris recovering device 6 is a device that recovers debris from waste water generated with cleaning by the cleaning portion 12. The debris is dirt derived from attached organisms removed from the cleaning target by cleaning. The debris recovering device 6 suctions waste water generated with cleaning by the cleaning portion 12 via a waste-water recovery hose 61 (see FIG. 2 described later). The debris recovering device 6 recovers debris (residue) by filtering the suctioned waste water.

The reel 7 is a device for bundling and winding the electric cable 41 and the hoses 51 and 61 connected to the underwater cleaning-work apparatus 1. When the underwater cleaning-work apparatus 1 is not in use, the electric cable 41 and the hoses 51 and 61 are wound around the reel 7, and the underwater cleaning-work apparatus 1 is also accommodated in an accommodating portion (not shown) disposed in the vicinity of the reel 7. When the underwater cleaning-work apparatus 1 is in use, the electric cable 41 and the hoses 51 and 61 are reeled out of the reel 7, and the underwater cleaning-work apparatus 1 is made movable under water within a range corresponding to the amount of the reeled-out electric cable 41 and the hoses 51 and 61.

A flow of work for cleaning the ship bottom by using the underwater cleaning-work system 100 configured as described above will be exemplified below. Here, it is assumed that the generator 2, the power distribution panel 3, the control device 4, the high-pressure pump 5, the debris recovering device 6, the reel 7, the operating device 8, and the terminal device 9 are disposed on a work ship.

First, the work ship approaches a ship to be a cleaning target (cleaning-target ship). When the work ship approaches the cleaning-target ship, the electric cable 41 and the hoses 51, 61 are reeled out of the reel 7, and the underwater cleaning-work apparatus 1 is put into the sea. The operator operates the operating device 8 while viewing the display device (a part of the terminal device 9) that displays an image of the camera 13 or the like, and brings the underwater cleaning-work apparatus 1 close to the cleaning target ship. Then, the operator brings the underwater cleaning-work apparatus 1 close to a cleaning spot with an appropriate posture (cleaning posture).

The operator operates the high-pressure pump 5 so as to move the underwater cleaning-work apparatus 1 straight, which has approached the cleaning spot with the cleaning posture in a state where the cleaning portion 12 is operated. As a result, the deposits attached to the hull can be removed by using the jet flow generated by the injection of the high-pressure water. Further, the debris recovering device 6 is operated during the cleaning, and the waste water generated by the removal of the deposits is sent to the debris recovering device 6. That is, contamination of the sea by the cleaning can be suppressed. The operator completes the cleaning work while causing the underwater cleaning-work apparatus 1 to repeatedly move straight and turn in accordance with a cleaning range.

When there are other cleaning spots, the underwater cleaning-work apparatus 1 releases the cleaning posture and moves to another cleaning spot. The movement as above is made after a side surface of a ship has been cleaned, when the bottom surface or side surface on the opposite side of the ship needs to be further cleaned, for example. When the cleaning of all the cleaning spots is completed, the underwater cleaning-work apparatus 1 moves under water and returns to the vicinity of the work ship by the operation of the operator. As a result, the underwater cleaning-work apparatus 1 is recovered, and the electric cable 41 and the hoses 51 and 61 are wound around the reel 7.

Note that it is configured such that the operator operates the underwater cleaning-work apparatus 1 in the above, but this is exemplification. It may be so configured that at least a part of the operation described above is automatically performed by the underwater cleaning-work apparatus 1.

### <2. UNDERWATER CLEANING-WORK APPARATUS>

Hereinafter, the configuration of the underwater cleaning-work apparatus 1 of this Embodiment will be described in detail.

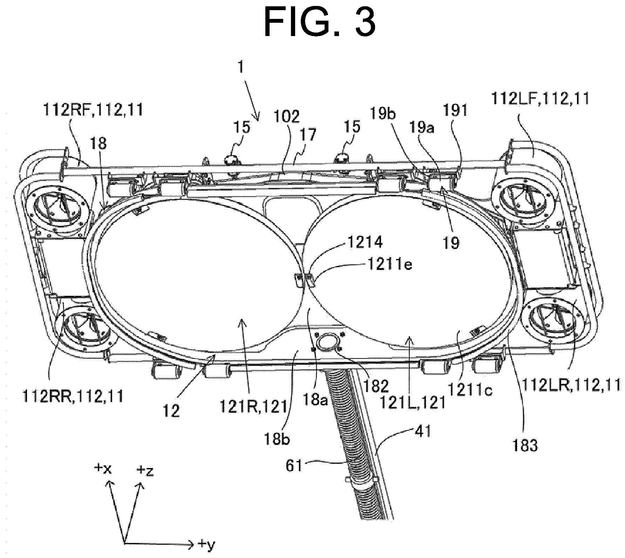

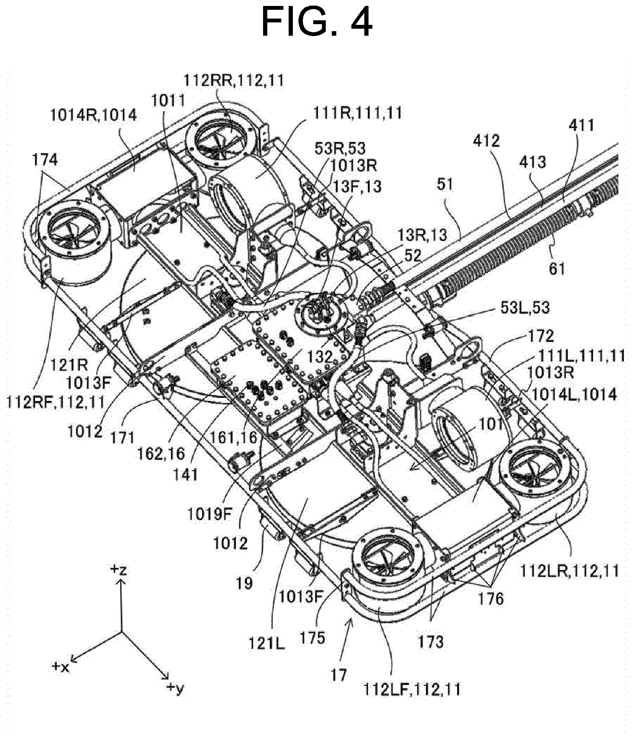

FIG. 2 is a perspective view showing a schematic configuration of the underwater cleaning-work apparatus 1 according to the Embodiment of the present invention. FIG. 3 is a schematic perspective view of the underwater cleaning-work apparatus 1 according to the Embodiment of the present invention as viewed from a direction different from that in FIG. 1. Specifically, FIG. 2 is a perspective view of the underwater cleaning-work apparatus 1 as viewed from diagonally above. FIG. 3 is a perspective view of the underwater cleaning-work apparatus 1 as viewed from diagonally below. FIG. 4 is a schematic perspective view showing a state where some of the cover members are removed from the underwater cleaning-work apparatus 1 shown in FIG. 1. Some of the cover members are a main-body cover 102, a camera cover 131, and a cleaning-portion cover 18.

As shown in FIGS. 2 to 4, the underwater cleaning-work apparatus 1 includes a main-body portion 10, the thruster 11, the cleaning portion 12, the camera 13, the light 15, a waterproof box 16, a bumper portion 17, and the cleaning-portion cover 18.

### [2-1. Main Body]

The main-body portion 10 includes a frame portion 101 and a main-body cover 102. The frame portion 101 is made of metal such as stainless steel. The main-body cover 102 is made of, for example, a resin such as fiber reinforced plastics (FRP). It is to be noted that a buoyant body may be attached to a back surface of the main-body cover 102 in order to adjust balance of the posture and the like of the underwater cleaning-work apparatus 1 under water. Further, the buoyant body for balance adjustment may be disposed on the frame portion 101. The buoyancy body may be a foaming body, for example.

### (2-1-1. Frame Portion)

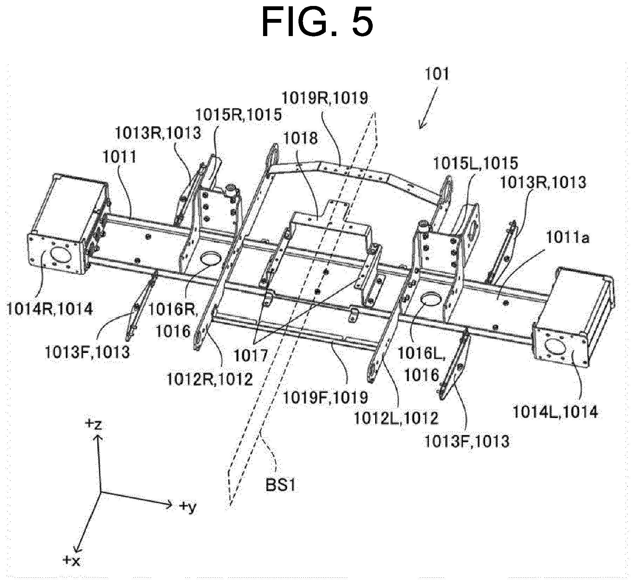

FIG. 5 is a perspective view showing a schematic configuration of the frame portion 101 included in the underwater cleaning-work apparatus 1 according to the Embodiment of the present invention. As shown in FIG. 5, the frame portion 101 is constituted by a plurality of frame members. The plurality of frame members are connected to each other by screwing or welding, for example. The frame portion 101 includes a main frame 1011, a first sub-frame 1012, and a second sub-frame 1013.

The main frame 1011 extends in the left-right direction. The main frame 1011 has a U-shape on a side view (as viewed in the left-right direction). Box-shaped end-part thruster-mounting portions 1014 used for mounting the thrusters 11 are provided at both left and right end parts of the main frame 1011. Specifically, the end-part thruster-mounting portion 1014 includes a left-end thruster-mounting portion 1014L provided at the left end of the main frame 1011 and a right-end thruster-mounting portion 1014R provided at the right end of the main frame 1011.

Further, between the left and right end parts of the main frame 1011, there are provided two intermediate-part-thruster mounting portions 1015 which are disposed symmetrically with respect to a bisecting plane BS1 bisecting the main frame 1011 into left and right halves. Each of the two intermediate-part-thruster mounting portions 1015 is erected facing upward on a bottom wall 1011a of the main frame 1011 and is used for mounting of the thruster 11. Specifically, the intermediate-part-thruster mounting portion 1015 includes a left intermediate-part-thruster mounting portion 1015L disposed on the left side of the bisecting plane BS1 and a right intermediate-part-thruster mounting portion 1015R disposed on the right side of the bisecting plane BS1.

Further, two cleaning-portion through holes 1016 are provided between the left and right end parts of the main frame 1011 so as to be disposed symmetrical with respect to the bisecting plane BS1. Each of the two cleaning-portion through holes 1016 penetrates the bottom wall 1011a of the main frame 1011 in the up-down direction and is used for mounting of the cleaning portion 12. Specifically, the cleaning-portion through hole 1016 includes a left cleaning-portion through hole 1016L disposed on the left side of the bisecting plane BS1 and a right cleaning-portion through hole 1016R disposed on the right side of the bisecting plane BS1. The left cleaning-portion through hole 1016L is disposed so as to be surrounded by the upright frame constituting the left intermediate-part-thruster mounting portion 1015L. The right cleaning-portion through hole 1016R is disposed so as to be surrounded by the upright frame constituting the right intermediate-part thruster-mounting portion 1015R.

As is known from the above, the thruster 11 and the cleaning portion 12 are mounted on the main frame 1011. That is, the main-body portion 10 includes the main frame 1011 on which the thruster 11 and the cleaning portion 12 are mounted. In other words, the thruster 11 and the cleaning portion 12 are mounted on the same frame (main frame 1011). Since the thruster 11 and the cleaning portion 12 are mounted on the same frame, the height of the underwater cleaning-work apparatus 1 can be reduced. Further, since the thruster 11 and the cleaning portion 12 are mounted on the same frame, assembling performance of the underwater cleaning-work apparatus 1 can be improved.

It is to be noted that a box mounting portion 1017 constituted by a pair of left and right frame members erected upward is provided at a center part in the left-right direction of the bottom wall 1011a of the main frame 1011. The box mounting portion 1017 is used for mounting the waterproof box 16. Further, on the box mounting portion 1017, a camera mounting portion 1018 having a gate shape on a front view (when viewed from the front) is provided. The camera mounting portion 1018 is used for mounting the camera 13. In other words, not only the thruster 11 and the cleaning portion 12 but also the waterproof box 16 and the camera 13 are mounted on the same frame (main frame 1011) in this Embodiment.

The first sub-frame 1012 is disposed above the main frame 1011 and extends in the front-rear direction. The first sub-frame 1012 has a plate shape extending in the up-down direction. The first sub-frame 1012 protrudes forward from the front end of the main frame 1011 and protrudes rearward from the rear end of the main frame 1011. Specifically, the first sub-frame 1012 includes a left first sub-frame 1012L and a right first sub-frame 1012R which are symmetrically disposed with respect to the bisecting plane BS1. The left first sub-frame 1012L is mounted on the right side surface of the upright frame constituting the left intermediate-part-thruster mounting portion 1015L. The right first sub-frame 1012R is mounted on the left side surface of the upright frame constituting the right intermediate-part-thruster mounting portion 1015R.

The left and right first sub-frames 1012L, 1012R support the bumper portion 17. Further, a bridging frame 1019 extending in the left-right direction is provided between the left and right first sub-frames 1012L, 1012R in the left-right direction. Specifically, the bridging frame 1019 includes a front-side bridging frame 1019F and a rear-side bridging frame 1019R.

The front-side bridging frame 1019F is disposed on the front close to the main frame 1011, and left and right end parts thereof are mounted on lower end parts of the left and right first sub-frames 1012L, 1012R. The front-side bridging frame 1019F is used for mounting the waterproof box 16 together with the main frame 1011. The rear-side bridging frame 1019R is disposed in the rear close to the main frame 1011, and left and right end parts thereof are mounted on upper end parts of the left and right first sub-frames 1012L, 1012R. The rear-side bridging frame 1019R is used for a clamp for holding the electric cable 41.

A second sub-frame 1013 is an L-shaped member extending in the front-rear direction. Specifically, the second sub-frame 1013 includes two front second sub-frames 1013F extending forward from the front surface of the main frame 1011 and two rear second sub-frames 1013R extending rearward from the rear surface of the main frame 1011. The two front second sub-frames 1013F and the two rear second sub-frames 1013R are disposed symmetrically with respect to the bisecting plane BS1 that bisects the main frame 1011 into left and right halves, respectively. Further, the two front second sub-frames 1013F and the two rear second sub-frames 1013R are disposed outward of the left and right first sub-frames 1012L and 1012R in the left-right direction. The two front second sub-frames 1013F and the two rear second sub-frames 1013R are disposed at the same positions in the left-right direction of the main frame 1011. The four second sub-frames 1013 are used to support the bumper portion 17 and the cleaning-portion cover 18.

### (2-1-2. Main-Body Cover)

The main-body cover 102 is open downward and has a shape extending longer in the left-right direction than in the front-rear direction on a plan view (when viewed from the up-down direction). As can be seen from a comparison between FIGS. 2 and 4, the main-body cover 102 is disposed at a position covering the frame portion 101 of the frame portion 101 and the thruster 11. The main-body cover 102 covers only the frame portion 101 of the frame portion 101 and the thruster 11 and does not cover the thruster 11. The main-body cover 102 only needs to cover at least a part of the frame portion 101. In this Embodiment, the main-body cover 102 covers the waterproof box 16 mounted on the frame portion 101 and the wiring and piping connected to components mounted on the frame portion 101. The main-body cover 102 is fixed to the frame portion 101.

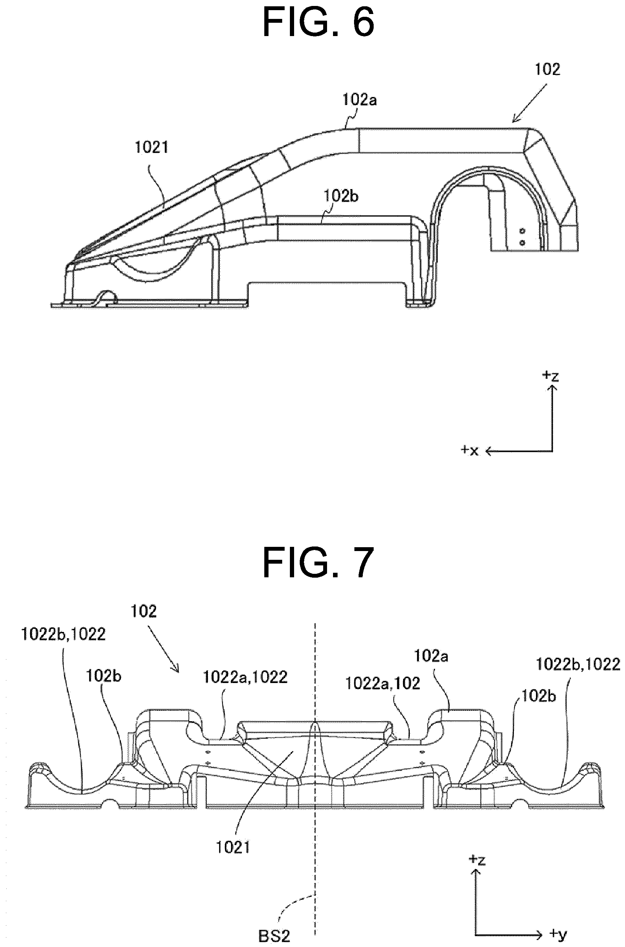

FIG. 6 is a side view showing a schematic configuration of the main-body cover 102 included in the underwater cleaning-work apparatus 1 according to the Embodiment of the present invention. Specifically, FIG. 6 is a view of the main-body cover 102 as viewed from the left. As shown in FIG. 6, an inclined portion 1021 is provided on the surface of the main-body cover 102. The inclined portion 1021 is provided capable of reducing resistance when the underwater cleaning-work apparatus 1 moves under water. Further, the inclined portion 1021 is provided capable of generating a pressing force toward the cleaning portion 12 side with respect to the main-body portion 10 when the underwater cleaning-work apparatus 1 moves for cleaning.

By providing the inclined portion 1021, the pressing force as described above is obtained when the cleaning work is performed and thus, a size of the mechanism that generates the force for pressing the cleaning portion 12 against the cleaning target can be reduced. It is to be noted that, in this Embodiment, as will be described later, the thruster 11 is used as a mechanism for generating a force for pressing the cleaning portion 12 against the cleaning target. By providing the inclined portion 1021, the size of the thruster 11 can be reduced.

Specifically, the inclined portion 1021 includes upward inclination from the front toward the rear. In this Embodiment, by providing the inclined portion 1021, the height position of the front end part of the main-body cover 102 can be reduced to half or less of the height position of the rear end part, for example. By providing the inclined portion 1021, a pressing force can be generated so that the front side does not float, when the underwater cleaning-work apparatus 1 moves straight forward. Therefore, it is possible to reduce the size of a mechanism that generates a force for pressing the underwater cleaning-work apparatus 1 against the cleaning target when the cleaning work is performed, while the underwater cleaning-work apparatus 1 moves straight forward.

It is to be noted that, in this Embodiment, the electric cable 41 and the hoses 51 and 61 (see FIG. 2 and the like) described above extend rearward from the main-body portion 10. In other words, the underwater cleaning-work apparatus 1 includes the wiring 41 and the pipings 51 and 61 extending rearward from the main-body portion 10. With the configuration as above, the underwater cleaning-work apparatus 1 can be made thinner. Further, the operability of the underwater cleaning-work apparatus 1 that performs the cleaning work while moving forward can be improved.

Further, in this Embodiment, the main-body cover 102 is configured to include the inclined portion 1021 that is inclined upward from the front side toward the rear side, but this is merely exemplification. The main-body cover 102 may include another inclined portion that is inclined upward from the outside toward the inside.

FIG. 7 is a front view showing a schematic configuration of the main-body cover 102 included in the underwater cleaning-work apparatus 1 according to the Embodiment of the present invention. As shown in FIGS. 2 and 7, at least one groove portion 1022 extending in the front-rear direction is provided on the surface of the main-body cover 102. Specifically, the main-body cover 102 has a plurality of groove portions 1022 on the surface thereof. The groove portion 1022 is recessed downward with respect to the surface of the main-body cover 102. The groove portion 1022 extends from the front end to the rear end of the main-body cover 102. By providing the groove portion 1022, water can be made to flow in the front-rear direction along the groove portion 1022. Therefore, in the underwater cleaning-work apparatus 1, straight traveling stability in the front-rear direction can be ensured.

More specifically, the groove portion 1022 includes a pair of first groove portions 1022a and a pair of second groove portions 1022b. As shown in FIG. 7, the main-body cover 102 has a back-high portion 102a having a large height in the up-down direction and a back-bottom portion 102b having a small height in the up-down direction. The back-high portion 102a is located at the center of the main-body cover 102 in the left-right direction. The back-bottom portion 102b is disposed on each of the left side and the right side of the back-high portion 102a. The left and right back-bottom portions 102b are disposed symmetrically with respect to the back-high portion 102a. An upper end of the back-high portion 102a is higher than an upper end of the back-bottom portion 102b. It is to be noted that the inclined portion 1021 described above is provided on the front side of the back-high portion 102a.

The pair of first groove portions 1022a are provided in the back-high portion 102a. The pair of first groove portions 1022a are disposed symmetrically with respect to a bisecting plane BS2 that bisects the back-high portion 102a (which may also be referred to as the main-body cover 102) into left and right halves. The pair of first groove portions 1022a are provided by being recessed with respect to the surface of the back-high portion 102a and extend from the front end to the rear end.

One of the pair of second groove portions 1022b is provided on the left back-bottom portion 102b, and the other is provided on the right back-bottom portion 102b. The pair of second groove portions 1022b are disposed symmetrically with respect to the bisecting plane BS2 that bisects the back-high portion 102a into left and right halves. The pair of second groove portions 1022b are provided by being recessed with respect to the surface of the back-bottom portion 102b and extend from the front end to the rear end.

Since the pair of first groove portions 1022a and the pair of second groove portions 1022b are provided as described above, irregularities are provided on the surface of the main-body cover 102 in the left-right direction. By providing such irregularities on the surface of the main-body cover 102, the main-body portion 10 can be made stable by using the flow of water.

### [2-2. Thruster]

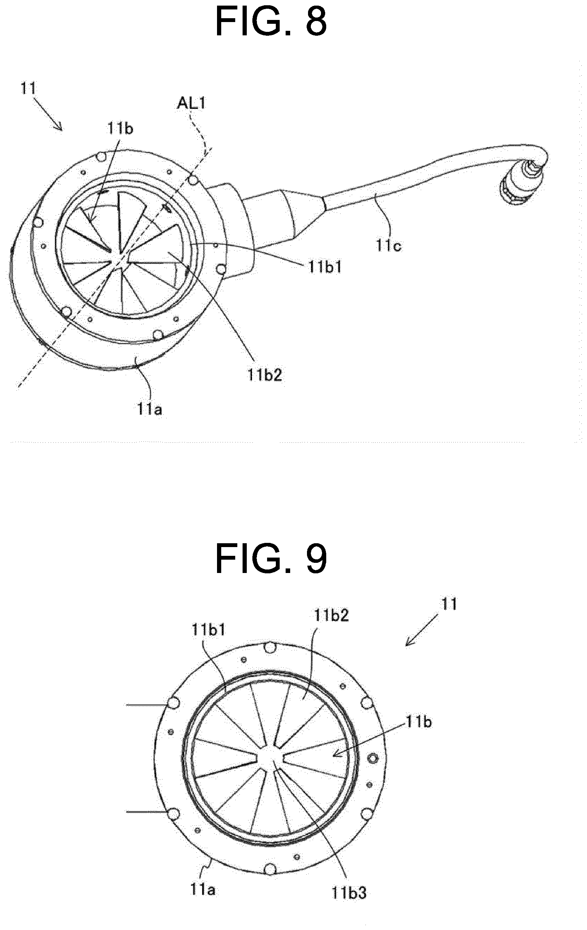

The thruster 11 applies a propulsive force to the main-body portion 10. FIG. 8 is a perspective view showing a schematic configuration of the thruster 11 included in the underwater cleaning-work apparatus 1 according to the Embodiment of the present invention. As shown in FIG. 8, each of the thrusters 11 includes a cylindrical thruster main-body 11a, a propeller portion 11b disposed in the thruster main-body 11a, and a wiring portion 11c extending from the thruster main-body 11a. The propeller portion 11b is provided rotatably around an axis AL1. It is to be noted that the axis AL1 is a virtual line that passes through the center of the cylindrical thruster main-body 11a and extends in a direction parallel to the direction in which the thruster main-body 11a extends.

The thruster main-body 11a is configured to include a motor. Electric power is supplied to the motor via the wiring portion 11c electrically connected to the above-described electric cable 41 (see FIG. 2 and the like). In response to the supplied electric power, the propeller portion 11b rotates around the axis AL1. When the propeller portion 11b rotates under water, a propulsive force is applied to the underwater cleaning-work apparatus 1.

It is to be noted that the propeller portion 11b includes an annular rotating body 11b1 with the axis AL1 as a center, and a plurality of blades 11b2 protruding inward from the rotating body 11b1 in detail. The rotating body 11b1 is rotatably supported by the thruster main-body 11a. FIG. 9 is a view of the thruster main-body 11a and the propeller portion 11b shown in FIG. 8 as viewed along a direction in which the axis AL1 extends.

As shown in FIG. 9, when the propeller portion 11b is viewed on a plan view along the direction in which the axis AL1 extends, a circular hole 11b3 surrounded by tip end portions of the plurality of blades 11b2 is present at the center of the propeller portion 11b. With the configuration as above, it is possible to make a floating matter such as vinyl floating under the sea less likely to wrap around the thruster 11, as compared with a case of a thruster having such a configuration that a rotary shaft body supporting the blades is disposed at a rotation center of the propeller portion. However, the thruster 11 may be a thruster having such a configuration that a rotary shaft body that supports blades is disposed at the rotation center of the propeller portion.

In this Embodiment, the underwater cleaning-work apparatus 1 includes a plurality of the thrusters 11. And the thrusters 11 include two types of thrusters that apply propulsive forces in different directions. Specifically, the thruster 11 includes a front-rear thruster 111 that applies a propulsive force in the front-rear direction to the main-body portion 10. That is, the underwater cleaning-work apparatus 1 includes the front-rear thruster 111 that applies a propulsive force in the front-rear direction. Further, the thrusters 11 include an up-down thruster 112 that applies a propulsive force in the up-down direction to the main-body portion 10. That is, the underwater cleaning-work apparatus 1 includes the up-down thruster 112 that applies a propulsive force in the up-down direction. By disposing the front-rear thruster 111 and the up-down thruster 112, the underwater cleaning-work apparatus 1 can perform pitching, rolling, and yawing under water.

It is to be noted that the front-rear thruster 111 and the up-down thruster 112 are disposed at different spots and with different postures but are formed of the same product. That is, both the front-rear thruster 111 and the up-down thruster 112 have the structure shown in FIG. 8 described above. However, this is exemplification, and the front-rear thruster 111 and the up-down thruster 112 may be thrusters having different configurations.

Further, as described above, the main-body portion 10 includes a main frame 1011 on which the thruster 11 and the cleaning portion 12 are mounted. And the thrusters 11 include the front-rear thrusters 111 and the up-down thrusters 112. Therefore, the main-body portion 10 includes the main frame 1011 on which the cleaning portion 12, the up-down thruster 112, and the front-rear thruster 111 are mounted.

### (2-2-1. Front-rear thruster)

The front-rear thrusters 111 are disposed in the main-body portion 10 such that the axis AL1 shown in FIG. 8 is parallel to the front-rear direction. The front-rear thrusters 111 are mounted on an intermediate-part thruster-mounting portion 1015 (see FIG. 5) provided on the main frame 1011.

As shown in FIGS. 2 and 4, in this Embodiment, the underwater cleaning-work apparatus 1 includes a plurality of the front-rear thrusters 111. The front-rear thrusters 111 include a left-side front-rear thruster 111L and a right-side front-rear thruster 111R. The left-side front-rear thruster 111L is mounted on the left intermediate-part thruster-mounting portion 1015L (see FIG. 5). The right-side front-rear thruster 111R is mounted on the right intermediate-part thruster-mounting portion 1015R (see FIG. 5). The left and right front-rear thrusters 111L and 111R are disposed symmetrically with respect to a bisecting plane that bisects the main-body portion 10 into left and right halves.

It is to be noted that, in this Embodiment, the number of the front-rear thrusters 111 is two, but this is exemplification. The number of the front-rear thrusters 111 may be one or three or more.

As shown in FIG. 2, the front-rear thruster 111 is disposed side by side with the groove portion 1022 in the front-rear direction. With the configuration as above, even without shifting the height position in the up-down direction at which the front-rear thruster 111 is provided from the main-body cover 102, hindrance of the flow of water in the front-rear thruster 111 by the main-body cover 102 can be suppressed. That is, with the configuration as above, the front-rear thruster 111 can be disposed while suppressing an increase in a thickness of the underwater cleaning-work apparatus 1 in the up-down direction.

Specifically, as shown in FIG. 2, each of the left and right front-rear thrusters 111L and 111R is disposed on the rear of the second groove portion 1022b. Each of the left and right front-rear thrusters 111L and 111R is disposed at a position lower than the uppermost end part of the main-body cover 102. The right and left front-rear thrusters 111L, 111R are mounted on the main-body portion 10, while thinning of the underwater cleaning-work apparatus 1 is promoted.

In the underwater cleaning-work apparatus 1, the left and right front-rear thrusters 111L and 111R are independently controlled. For example, when the propeller portions 11b of the left and right front-rear thrusters 111L and 111R are rotated in the same direction at the same speed, the underwater cleaning-work apparatus 1 travels straight in the front-rear direction. When the propeller portion 11b rotates to one side, it moves forward, while in the case of rotating to the other side, it moves backward. Further, for example, the underwater cleaning-work apparatus 1 turns in the left direction or the right direction by making the rotation directions of the left and right front-rear thrusters 111L and 111R opposite to each other.

### (2-2-2. Up-Down Thruster)

The up-down thrusters 112 are disposed in the main-body portion 10 such that the axis AL1 shown in FIG. 8 is parallel to the up-down direction. The up-down thruster 112 is mounted on the end-part thruster-mounting portion 1014 (see FIG. 5) provided on the main frame 1011.

As shown in FIGS. 2 to 4, in this Embodiment, the underwater cleaning-work apparatus 1 includes a plurality of up-down thrusters 112. The up-down thrusters 112 include a left-front side up-down thruster 112LF, a left-rear side up-down thruster 112LR, a right-front side up-down thruster 112RF, and a right-rear side up-down thruster 112RR.

The left-front side up-down thruster 112LF is mounted on a front wall of the box-shaped left-end thruster-mounting portion 1014L (see FIG. 5). The left-rear side up-down thruster 112LR is mounted on a rear wall of the box-shaped left-end thruster-mounting portion 1014L. The left-front side up-down thruster 112LF and the left-rear side up-down thruster 112LR are disposed symmetrically with respect to the left-end thruster-mounting portion 1014L. The right-front side up-down thruster 112RF is mounted on a front wall of the box-shaped right-end thruster-mounting portion 1014R (see FIG. 5). The right-rear side up-down thruster 112RR is mounted on a rear wall of the box-shaped right-end thruster-mounting portion 1014R. The right-front side up-down thruster 112RF and the right-rear side up-down thruster 112RR are disposed symmetrically with respect to the right-end thruster-mounting portion 1014R. Further, the up-down thrusters 112LF and 112LR disposed on the left side and the up-down thrusters 112RF and 112RR disposed on the right side are disposed symmetrically with respect to a bisecting plane that bisects the main-body portion 10 into left and right halves.

It is to be noted that, in this Embodiment, the number of the up-down thrusters 112 is four, but this is exemplification. The number of the up-down thrusters 112 may be the number other than 4, such as three, for example.

As shown in FIGS. 2 to 4, in this Embodiment, the up-down thruster 112 is disposed at a corner of the underwater cleaning-work apparatus 1. Specifically, the up-down thrusters 112 are disposed at four corners of the underwater cleaning-work apparatus 1. More specifically, the left-front side up-down thruster 112LF is disposed at the left-front side corner part of the underwater cleaning-work apparatus 1. The left-rear side up-down thruster 112LR is disposed at a left-rear side corner part of the underwater cleaning-work apparatus 1. The right-front side up-down thruster 112RF is disposed at a right-front side corner part of the underwater cleaning-work apparatus 1. The right-rear side up-down thruster 112RR is disposed at a right-rear side corner part of the underwater cleaning-work apparatus 1. Since the up-down thrusters 112 are disposed at the four corners, operability of the underwater cleaning-work apparatus 1 can be improved. For example, pitching and rolling operations of the underwater cleaning-work apparatus 1 can be performed easily.

Further, in this Embodiment, the upper and lower sides of the up-down thruster 112 are open spaces. In other words, no shields are disposed above and below the up-down thruster 112. This is true for all of the four up-down thrusters 112LF, 112LR, 112RF and 112RR. Since the upper and lower sides of the up-down thrusters 112 are open, a water flow can be efficiently generated by the rotation of the propeller portion 11b.

It is to be noted that, in this Embodiment, the up-down thrusters 112 include guard portions 11d (see FIG. 2) at the upper end part and the lower end part. The guard portion 11d has a structure in which the rod-shaped members 11d1 are disposed in a lattice shape. An interval between the adjacent rod-shaped members 11d1 is wide, and the guard portion 11d hardly obstructs the water flow. On the other hand, by providing the guard portion 11d, the propeller portion 11b can be protected from an object floating under water. However, the up-down thrusters 112 may not include the guard portion 11d. Further, the front-rear thrusters 111 may include the guard portion 11d.

In the underwater cleaning-work apparatus 1, the four up-down thrusters 112LF, 112LR, 112RF, and 112RR are independently controlled. For example, the underwater cleaning-work apparatus 1 moves in the up-down direction when the propeller portions 11b of the four up-down thrusters 112LF, 112LR, 112RF, and 112RR are rotated in the same direction at the same speed. When the propeller portion 11b rotates to one side, movement is made upward (floats), and in the case of rotation to the other side, the movement is made downward (goes underwater). Further, for example, the underwater cleaning-work apparatus 1 performs rolling by making the rotation directions of the two up-down thrusters 112LF and 112LR rotating at the same speed on the left side opposite to the two up-down thrusters 112RF and 112RR rotating at the same speed on the right side. Further, for example, the underwater cleaning-work apparatus 1 performs pitching by making the rotation directions of the two up-down thrusters 112LF and 112RF rotating at the same speed on the front side opposite to the two up-down thrusters 112LR and 112RR rotating at the same speed on the rear side.

### [2-3. Cleaning Portion]

The cleaning portion 12 is disposed below the main-body portion 10. For example, when a side surface of a ship is to be cleaned, the underwater cleaning-work apparatus 1 performs the above-described pitching and rolling by using the up-down thruster 112 to cause the cleaning portion 12 to face the side surface of the ship. Then, the underwater cleaning-work apparatus 1 causes the cleaning portion 12 to approach the side surface of the ship by driving the up-down thruster 112. The underwater cleaning-work apparatus 1 cleans the side surface of the ship while moving forward by the front-rear thruster 111 in a state where the cleaning portion 12 is brought close to the side surface of the ship.

In this Embodiment, as shown in FIGS. 3 and 4, the cleaning portion 12 is disposed at a position that does not overlap the up-down thruster 112 on a plan view (bottom view). In other words, the underwater cleaning-work apparatus 1 includes the thruster 112 disposed at a position shifted from the cleaning portion 12 on a plan view. The thruster 112 disposed at a position shifted from the cleaning portion 12 is an up-down thruster that applies a propulsive force in the up-down direction.

The configuration in which the up-down thruster 112 and the cleaning portion 12 are disposed at positions shifted from each other (positions not overlapping each other) on a plan view is different from the configuration in which the propeller and the cleaning portion are disposed on the same axis. When the up-down thruster 112 and the cleaning portion 12 are configured to be shifted from each other on a plan view, the thickness in the up-down direction of the underwater cleaning-work apparatus 1 can be reduced. As a result, for example, an influence of a tidal current can be suppressed or resistance of the underwater cleaning-work apparatus 1 itself can be reduced, and the operability of the underwater cleaning-work apparatus 1 can be improved.

Specifically, the thruster (up-down thruster) 112 disposed at a position shifted from the cleaning portion 12 on a plan view is disposed closer to an outer edge side than the cleaning portion 12. In this Embodiment, a plurality of the (four) up-down thrusters 112 are disposed so as to surround the cleaning portion 12. In other words, the cleaning portion 12 is disposed at the center part, and the up-down thrusters 112 are disposed on the periphery. With the configuration as above, positional relationship between the cleaning portion 12 and the cleaning target (side surface of the ship or the like) can be easily adjusted by independently controlling the driving of the plurality of up-down thrusters 112.

It is to be noted that, in this Embodiment, the front-rear thruster 111 is disposed closer to the center side than the up-down thruster 112. With the configuration as above, excessive widening of a disposition range of the thruster 11 on a plan view can be suppressed, and the size reduction of the underwater cleaning-work apparatus 1 can be promoted. Specifically, the front-rear thruster 111 is disposed at a position overlapping the cleaning portion 12 on a plan view.

In this Embodiment, the cleaning portion 12 includes a cleaning disk 121 that rotates during cleaning. Specifically, the cleaning portion 12 has a plurality of the cleaning disks 121. By providing a plurality of cleaning disks 121, the cleaning area can be made wide. More specifically, the cleaning portion 12 has two pieces of the cleaning disks 121 aligned in the left-right direction. By providing the two cleaning disks 121, the cleaning work can be performed efficiently, while a size increase of the underwater cleaning-work apparatus 1 is suppressed. It is to be noted that the number of the cleaning portions 12 may be changed as appropriate. The number of the cleaning portions 12 may be single or three or more. The cleaning disk 121 is constituted of stainless steel, for example.

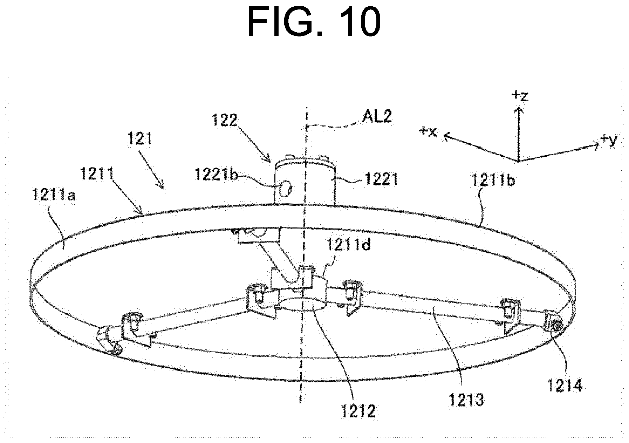

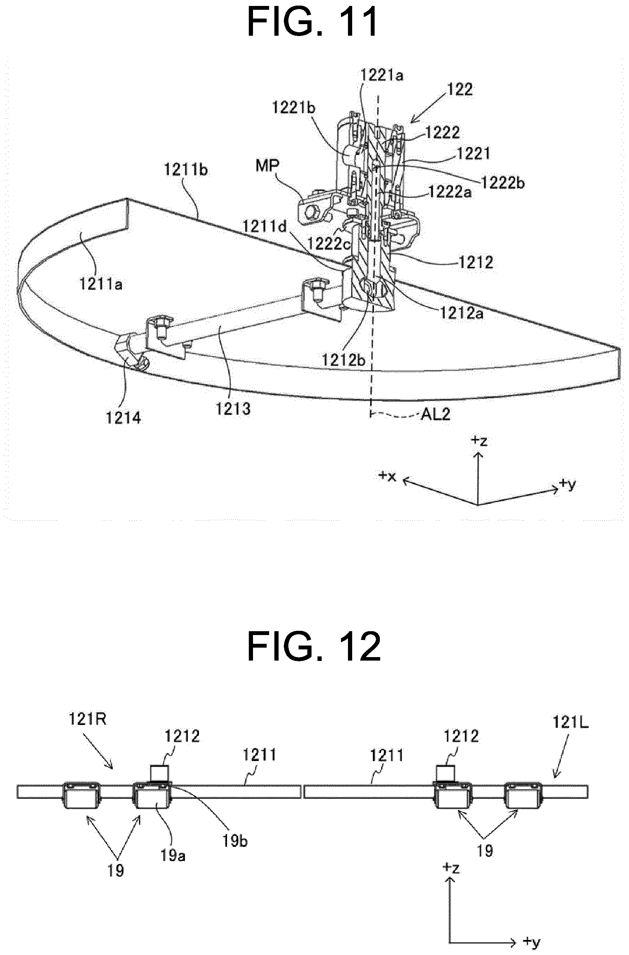

FIG. 10 is a perspective view showing a schematic configuration of the cleaning disk 121 included in the cleaning portion 12. In FIG. 10, description on the bottom wall of the cleaning disk 121 is omitted in order to facilitate understanding of the configuration of the cleaning disk 121. Further, FIG. 10 also shows a rotary joint 122 included in the cleaning portion 12 in addition to the cleaning disk 121. FIG. 11 is a sectional perspective view showing a vertical section of the cleaning disk shown in FIG. 10. A vertical cross section shown in FIG. 11 is parallel to the front-rear direction. FIG. 11 also includes a cross-sectional perspective view of the rotary joint 122. The configuration of the cleaning disk 121 will be described with reference to FIGS. 10 and 11.

Specifically, FIGS. 10 and 11 are views showing the configuration of a left cleaning disk 121L disposed on the left side of the underwater cleaning-work apparatus 1. The left cleaning disk 121L disposed on the left side of the underwater cleaning-work apparatus 1 and the right cleaning disk 121R disposed on the right side of the underwater cleaning-work apparatus 1 have the same structure except the direction of an injection nozzle. Therefore, the configuration of the cleaning disk 121 will be described using the left cleaning disk 121L as a typical example.

As shown in FIGS. 10 and 11, the cleaning disk 121 includes a disk main-body 1211, a disk shaft 1212, an in-disk piping 1213, and an injection nozzle 1214.

The disk main-body 1211 is provided rotatably around the axis AL2 (virtual line) extending vertically. The disk main-body 1211 has a cylinder portion 1211a, an upper wall portion 1211b, and a bottom wall portion 1211c (see FIG. 3). The cylinder portion 1211a has a cylindrical shape extending in the up-down direction. A center of the cylinder portion 1211a matches the axis AL2. The upper wall portion 1211b and the bottom wall portion 1211c are disk-shaped. The upper wall portion 1211b is disposed on an upper end of the cylinder portion 1211a and has an opening 1211d at a center part. The bottom wall portion 1211c is disposed on a lower end of the cylinder portion 1211a and has a plurality of notches 1211e on an outer peripheral edge. The plurality of notches 1211e are disposed at equal intervals in a circumferential direction around the axis AL2. In this Embodiment, the number of the notches 1211e is three, and the three notches 1211e are aligned at 120° intervals in the circumferential direction.

The disk shaft 1212 has a bottomed cylindrical shape extending in the up-down direction and is disposed in the opening 1211d provided in the upper wall portion 1211b. The disk shaft 1212 is fixed to the disk main-body 1211. The center of the disk shaft 1212 matches the axis AL2. The disk shaft 1212 protrudes upward and downward from the upper wall portion 1211b. A part of the disk shaft 1212 above the upper wall portion 1211b is disposed in a through hole 1016 for cleaning portion (see FIG. 5) provided in the main frame 1011. A plurality of side openings 1212b connected to an internal space 1212a of the disk shaft 1212 are provided on the side surface of the disk shaft 1212 below the upper wall portion 1211b. The plurality of side openings 1212b are aligned at equal intervals in a circumferential direction around the axis AL2. In this Embodiment, the number of the side openings 1212b is three, and the three side openings 1212b are aligned at 120° intervals in the circumferential direction.

The in-disk piping 1213 is a pipe extending linearly in a direction orthogonal to the axis AL2. The in-disk piping 1213 is fixed to the upper wall portion 1211b. One end of the in-disk piping 1213 is connected to the side opening 1212b. As described above, in this Embodiment, the number of the side openings 1212b is three, and the number of the in-disk pipings 1213 is three. The three in-disk pipings 1213 are aligned at 120° intervals in the circumferential direction around the axis AL2. The other end of each of the three in-disk pipings 1213 extends to the vicinity of an inner peripheral surface of the cylinder portion 1211a.

The injection nozzle 1214 is mounted on the other end of the in-disk piping 1213. In this Embodiment, the number of the in-disk pipings 1213 is three, and the number of the injection nozzles 1214 is also three. It is to be noted that the number of the injection nozzles 1214 may be other than three. Further, the number of the side openings 1212b and the number of the in-disk pipings 1213 may also be changed in accordance with the number of the injection nozzles 1214. The injection nozzle 1214 is exposed to the outside through the notch 1211e provided in the bottom wall portion 1211c. That is, the high-pressure water injected from the injection nozzle 1214 is injected to the outside. The injection nozzle 1214 is disposed to be inclined only by a predetermined angle with respect to a plane (horizontal plane) orthogonal to a direction (up-down direction) in which the axis AL2 extends. As a result, the high-pressure water injected from the injection nozzle 1214 can be directed to the cleaning object. The predetermined angle is, for example, 30°. It is to be noted that, between the left cleaning disk 121L and the right cleaning disk 121R, the directions of the injection ports of the injection nozzles 1214 in the circumferential direction (the circumferential direction around the axis AL2) are opposite to each other.

As shown in FIG. 11, the rotary joint 122 has a housing 1221 and a rotary shaft 1222.

The housing 1221 has a cylindrical shape extending up and down and is fixed to a mounting portion MP provided on the main frame 1011 (see FIG. 5). The center of the housing 1221 matches the axis AL2. A water filling port 1221b communicating with the internal space 1221a extending in the up-down direction of the housing 1221 is provided on the outer peripheral surface of the housing 1221. High-pressure water is injected into the water filling port 1221b from the high-pressure water hose 51 via a piping 53 provided on the frame portion 101. It is to be noted that, as shown in FIG. 4, the high-pressure water supplied from the high-pressure water hose 51 is distributed to a left piping 53L and a right piping 53R by a distribution portion 52 connected to the high-pressure water hose 51. The high-pressure water passing through the left piping 53L is supplied to the water filling port 1221b on the left cleaning disk 121L side. The high-pressure water passing through the right piping 53R is supplied to the water filling port 1221b on the right cleaning disk 121R side.

The rotary shaft 1222 has a lidded cylindrical shape extending in the up-down direction and is disposed in the internal space 1221a of the housing 1221. The rotary shaft 1222 is rotatably supported by the housing 1221. The center of the rotary shaft 1222 matches the axis AL2, and the rotary shaft 1222 is rotatable around the axis AL2. A shaft opening 1222b connected to the internal space 1222a of the rotary shaft 1222 is provided on the outer peripheral surface of the rotary shaft 1222. The rotary shaft 1222 has a flange portion 1222c on a lower part thereof. The flange portion 1222c is mounted on an upper end of the disk shaft 1212 of the cleaning disk 121. That is, the rotary shaft 1222 and the cleaning disk 121 rotate integrally. The internal space 1222a of the rotary shaft 1222 and the internal space 1212a of the disk shaft 1212 are connected to each other.

When the high-pressure water is poured into the water filling port 1221b of the rotary joint 122, the high-pressure water is supplied to the injection nozzle 1214 through each of insides of the rotary shaft 1222, the disk shaft 1212, and the in-disk piping 1213. The high-pressure water supplied to the injection nozzle 1214 is injected to the outside (cleaning target) from an injection port of the injection nozzle 1214. The cleaning target can be cleaned by the jet flow generated by the injection. The cleaning disk 121 is rotated by a reaction force by the injection of the high-pressure water. The rotation speed of the cleaning disk 121 changes in accordance with a supply amount of the high-pressure water. When the supply amount of the high-pressure water is increased, the rotation speed of the cleaning disk 121 is increased and the cleaning speed can be increased. The rotation speed of the cleaning disk 121 is, for example, 250 rpm.

It is to be noted that, as described above, the direction of the injection port of the injection nozzle 1214 is made opposite between the left cleaning disk 121L and the right cleaning disk 121R. Therefore, the left cleaning disk 121L and the right cleaning disk 121R rotate in opposite directions due to the reaction force of the high-pressure water.

### [2-4. Camera]

The camera 13 is mounted on the main frame 1011. Since the camera 13 is also mounted on the main frame 1011 in the same manner as the thruster 11 and the cleaning portion 12, the assembling performance of the underwater cleaning-work apparatus 1 can be improved. Specifically, the camera 13 is mounted on a camera mounting portion 1018 (see FIG. 5) provided on the main frame 1011 via a camera stand 132 (see FIG. 4). The camera 13 is covered by mounting the camera cover 131 to the camera stand 132 from above. It is to be noted that the camera cover 131 is made of a transparent material so that the surroundings of the underwater cleaning-work apparatus 1 can be photographed by the camera 13.

As can be known by referring to FIGS. 2 and 4, the camera 13 is disposed above the main-body cover 102. And in this Embodiment, the camera 13 includes a front camera 13F that photographs the front side and a rear camera 13R that photographs the rear side. Each of the front camera 13F and the rear camera 13R is configured by using a wide-angle lens (angle of view at approximately 170°). Therefore, the camera 13 can generally photograph the outer periphery of the underwater cleaning-work apparatus 1.

It is to be noted that, in this Embodiment, the number of cameras 13 is two, but this is exemplification. The number of the cameras 13 may be single or three or more. For example, in addition to the front camera 13F and the rear camera 13R, side cameras that photograph left and right of the underwater cleaning-work apparatus 1 may be provided.

### [2-5. Light]

The light 15 only needs to be disposed at a position where an image captured by the camera 13 in the cleaning work using the underwater cleaning-work apparatus 1 can be easily viewed. Further, the number of lights 15 may be determined as appropriate so that the above-described purpose can be achieved. The number of the lights 15 may be single or plural. In this Embodiment, the number of the lights 15 is plural.

Specifically, in the underwater cleaning-work apparatus 1, four lights 15 that illuminate the front and two lights 15 that illuminate the rear are provided. Two of the four lights 15 that illuminate the front are disposed on a front part of the bumper portion 17, and the remaining two are disposed on a front part of the main-body cover 102. The light 15 that illuminates the rear is disposed on the above-described rear-side bridging frame 1019R (see FIG. 2 and the like).

### [2-6. Waterproof Box]

The waterproof box 16 accommodates an electronic device. The electronic device accommodated in the waterproof box 16 may include at least a part of the sensor 14 described above. Further, the electronic device may include a control device such as a microcomputer. As shown in FIG. 4, the waterproof box 16 is mounted on the main frame 1011. Since the waterproof box 16 is also mounted on the main frame 1011 similarly to the thruster 11 and the cleaning portion 12, assembling performance of the underwater cleaning-work apparatus 1 can be improved.

Specifically, as shown in FIG. 4, the waterproof box 16 includes a first waterproof box 161 and a second waterproof box 162 each having a cuboid outer shape. It is to be noted that the number of the waterproof boxes 16 may be single. However, by providing a plurality of waterproof boxes 16, each waterproof box 16 can be configured to be compact. By making the waterproof box 16 compact, a possibility that a lid or the like of the box is damaged due to an influence of a water pressure can be reduced.

The first waterproof box 161 is mounted on the above-described box mounting portion 1017 (see FIG. 5). The second waterproof box 162 has its front end mounted on the above-described front-side bridging frame 1019F and a rear end mounted on the front wall of the main frame 1011. The first waterproof box 161 overlaps the main frame 1011 on a plan view and is located at a center part of the main-body portion 10 in the left-right direction. The second waterproof box 162 is disposed in front of the first waterproof box 161 and is located at the center part in the left-right direction of the main-body portion 10. The second waterproof box 162 is disposed at a position lower than the first waterproof box 161. By changing the height positions in the up-down direction of the first waterproof box 161 and the second waterproof box 162, the main-body cover 102 on which the inclined portion 1021 is provided can be mounted as appropriate.

Specifically, the above-described electric cable 41 includes a first electric cable 411 and a second electric cable 412 including a power line for supplying electric power for driving the thruster 11 (see FIG. 4). The first electric cable 411 includes power lines for the three thrusters 111L, 112LF, and 112LR disposed on the left side. The second electric cable 412 includes power lines for the three thrusters 111R, 112RF, and 112RR disposed on the right side. Further, the electric cable 41 includes a third electric cable 413. The third electric cable 413 includes a power-supply line for supplying electric power to a microcomputer (not shown) incorporated in the underwater cleaning-work apparatus 1, and a signal line for transmitting information from the camera 13 and the sensor 14 to the above-described control device 4 (see FIG. 1).

The first waterproof box 161 is a junction box, specifically. As shown in FIG. 4, the first electric cable 411 and the second electric cable 412 are connected to a rear surface of the first waterproof box 161. Further, the wiring portion 11c (see FIG. 8) of the left-side front-rear thruster 111L and the right-side front-rear thruster 111R are connected to the rear surface of the first waterproof box 161. Further, the wiring portion 11c (see FIG. 8) of the left-front side up-down thruster 112LF and the left-rear side up-down thruster 112LR are connected to the left side surface of the first waterproof box 161. Further, the wiring portions 11c of the right-front side up-down thruster 112RF and the right-rear side up-down thruster 112RR are connected to the right side surface of the first waterproof box 161.

A microcomputer and an IMU (both not shown) are incorporated in the second waterproof box 162. Further, a pressure sensor 141 is disposed on an upper surface of the second waterproof box 162. The above-described third electric cable 413 is connected to the rear surface of the second waterproof box 162. Further, a cable (not shown) for exchanging signals with the camera 13 is connected to the second waterproof box 162.

### [2-7. Bumper Portion]

As shown in FIGS. 2 to 4, the bumper portion 17 surrounds the main-body portion 10 and the thruster 11. The bumper portion 17 is constituted by a pipe material. The bumper portion 17 is mounted on the frame portion 101. By providing the bumper portion 17, a possibility that the main-body portion 10 or the thruster 11 comes into contact with a cleaning target such as a hull can be reduced.

Specifically, the bumper portion 17 is mounted on the first sub-frame 1012 and the second sub-frame 1013 described above. With the configuration as above, even when the bumper portion 17 comes into contact with a cleaning target such as a hull, deformation remains only to the sub-frames 1012 and 1013, and the deformation of the main frame 1011 on which the thruster 11 and the cleaning portion 12 are mounted can be prevented.

The bumper portion 17 includes a front bumper 171, a rear bumper 172, a left bumper 173, and a right bumper 174 (see FIG. 4). The front bumper 171 is constituted by a single pipe member extending in the left-right direction and is disposed in front of the main-body portion 10. Specifically, the front bumper 171 is mounted on the first sub-frame 1012 and the second sub-frame 1013 described above. The rear bumper 172 is constituted by a single pipe member extending in the left-right direction and is disposed on the rear of the main-body portion 10. The rear bumper 172 is mounted on rear end parts of the first sub-frame 1012 and the rear second sub-frame 1013R.

The left bumper 173 is disposed on the two up-down thrusters 112LF and 112LR on the left side and on the left of the left-end thruster-mounting portion 1014 L. The left bumper 173 is constituted by two U-shaped pipe members on a plan view. The two pipe members are aligned vertically with an interval. Both end parts of the two pipe members are mounted on coupling members 175 disposed on the left end parts of the front bumper 171 and the rear bumper 172, respectively. That is, the left bumper 173 is connected to the front bumper 171 and the rear bumper 172. Further, the two pipe members constituting the left bumper 173 are supported by a plate piece 176 projecting leftward from the left side surface of the left-end thruster-mounting portion 1014L.

The right bumper 174 is disposed on the two up-down thrusters 112RF and 112RR on the right side and the right of the right-end thruster-mounting portion 1014R. The right bumper 174 is constituted by two U-shaped pipe members on a plan view. The two pipe members are aligned vertically with an interval. Both end parts of the two pipe members are mounted on the coupling members 175 disposed on the right end parts of the front bumper 171 and the rear bumper 172, respectively. That is, the right bumper 174 is connected to the front bumper 171 and the rear bumper 172. Further, the two pipe members constituting the right bumper 174 are supported by the plate piece 176 projecting rightward from the right side surface of the right-end thruster-mounting portion 1014R. The right bumper 174 is disposed symmetrically to the left bumper 173 across the main frame 1011.

Two units of the lights 15 described above are mounted on the front bumper 171. The two lights 15 are disposed above the front bumper 171. Further, a roller 19 is mounted on the front bumper 171 and the rear bumper 172. That is, the roller 19 is provided on the bumper portion 17. Specifically, the roller 19 includes a columnar rotating body 19a extending in the left-right direction and a support body 19b rotatably supporting the rotating body 19a (see FIG. 2).

The roller 19 is disposed below the front bumper 171 and the rear bumper 172 via a mounting member 191. Specifically, the roller 19 is mounted on the mounting member 191 with a posture in which the rotating body 19a is on the lower side with respect to the support body 19b. The support body 19b is mounted on the mounting member 191. The lower end of the roller 19 is located below the bumper portion 17.

In this Embodiment, four of the rollers 19 are disposed on the front bumper 171 and another for of the rollers 19 are disposed on the rear bumper 172. The four rollers 19 disposed on the front bumper 171 and the four rollers 19 disposed on the rear bumper 172 are disposed symmetrically with respect to the main frame 1011. The four rollers 19 disposed on the front bumper 171 (the same applies to the rear bumper 172) are disposed two each close to the left and right end parts.

FIG. 12 is a front view showing a relationship between the roller 19 and the cleaning disk 121. As shown in FIG. 12, the lower end of the roller 19 is located below the lower end of the cleaning disk 121. That is, the roller 19 regulates a distance between the cleaning portion 12 and the cleaning target. The underwater cleaning-work apparatus 1 includes the roller 19 that regulates the distance between the cleaning portion 12 and the cleaning target. By providing the roller 19, contact between the cleaning portion 12 and the cleaning target can be prevented. Further, by providing the roller 19, the operability of the underwater cleaning-work apparatus 1 during cleaning can be improved.

### [2-8. Cleaning-Portion Cover]

As shown in FIGS. 2 and 3, the cleaning-portion cover 18 is disposed between the main-body portion 10 and the cleaning portion 12. Specifically, the cleaning-portion cover 18 is disposed between the main-body portion 10 and the cleaning portion 12 in the up-down direction. The cleaning-portion cover 18 covers at least a part of the cleaning portion 12. By providing the cleaning-portion cover 18, dispersion of waste water generated by cleaning using the cleaning portion 12 can be prevented.

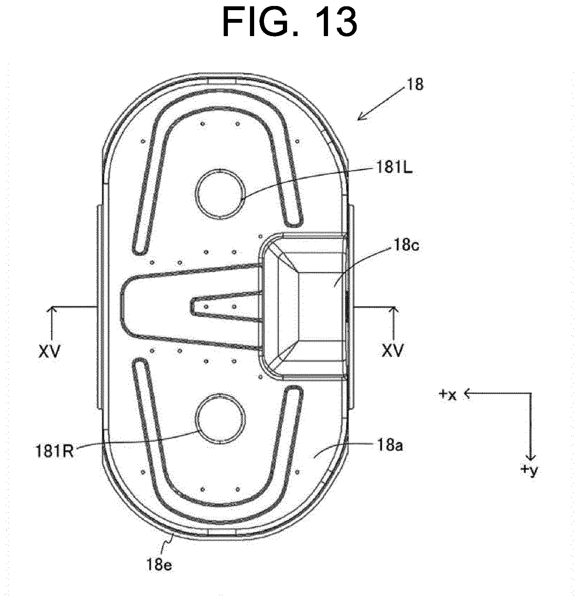

FIG. 13 is a plan view showing a schematic configuration of the cleaning-portion cover 18 included in the underwater cleaning-work apparatus 1 according to the Embodiment of the present invention. As shown in FIGS. 3 and 13, the cleaning-portion cover 18 has a cover upper-wall portion 18a and a cover side-wall portion 18b. The cover upper-wall portion 18a is disposed above the rotary-type cleaning disk 121 of the cleaning portion 12. The cover side-wall portion 18b extends downward from an outer edge of the cover upper-wall portion 18a. In this Embodiment, the cleaning portion 12 has two cleaning disks 121L and 121R. The cleaning-portion cover 18 covers the two cleaning disks 121L and 121R aligned in the left-right direction. Therefore, the cleaning-portion cover 18 extends in the left-right direction and is configured in a stadium shape on a plan view.

As shown in FIG. 13, two through holes 181L and 181R penetrating in the up-down direction are provided in the cover upper-wall portion 18a. The left through hole 181L is provided to pass the disk shaft 1212 of the left cleaning disk 121L. The right through hole 181R is provided to pass the disk shaft 1212 of the right cleaning disk 121R.

As shown in FIG. 3, a suction port 182 that suctions waste water generated with cleaning by the cleaning portion 12 is provided in the cleaning-portion cover 18. That is, the underwater cleaning-work apparatus 1 includes the suction port 182. One end of a waste-water recovery hose 61 is connected to the suction port 182. The other end of the waste-water recovery hose 61 is connected to the debris recovering device 6 (see FIG. 1) described above. A suction force is generated by drive of a pump, not shown, provided in the debris recovering device 6, and waste water flows from the suction port 182 toward the debris recovering device 6.

Specifically, the suction port 182 is provided in the cover side-wall portion 18b. More specifically, the suction port 182 is provided on a rear-side wall located on the rear side of the cover side-wall portion 18b. At least a part of the suction port 182 is disposed at a position shifted from the cleaning portion 12 on a bottom view (when viewed from below). Further, at least a part of the suction port 182 is disposed at a position shifted from the cleaning disk 121 on a bottom view.

In this Embodiment, the entire suction port 182 is disposed at a position shifted from the cleaning portion 12 and the cleaning disk 121 on a bottom view and does not overlap the cleaning portion 12 and the cleaning disk 121. More specifically, the entire suction port 182 is disposed at a position shifted from the two cleaning disks 121L and 121R on a bottom view and does not overlap the two cleaning disks 121L and 121R. Since the suction port 182 is disposed at a position shifted from the cleaning portion 12 or the cleaning disk 121, the waste water generated with the cleaning by the cleaning portion 12 can be efficiently suctioned from the suction port 182.

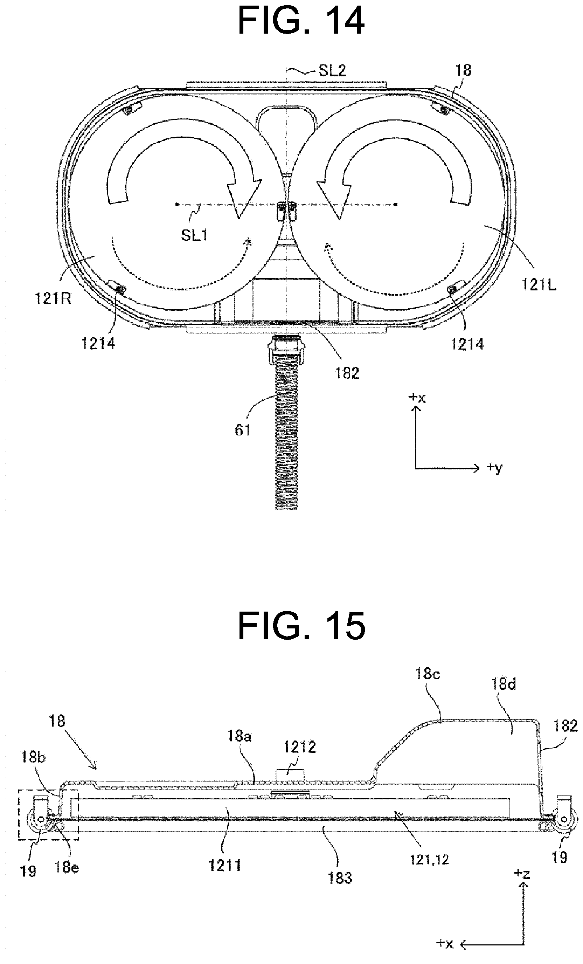

FIG. 14 is a schematic bottom view showing the relationship between the cleaning-portion cover 18 and the two cleaning disks 121L and 121R. It is to be noted that, in FIG. 14, a framed arrow indicates a direction of a water flow generated when the high-pressure water is injected from the injection nozzle 1214. Further, in FIG. 14, broken line arrows indicate the rotation directions of the cleaning disks 121L and 121R when the high-pressure water is injected from the injection nozzle 1214. Further, two straight lines SL1 and SL2 indicated by one-dot chain lines in FIG. 14 are virtual lines to facilitate understanding.

As described above, the directions in which the high-pressure water is injected from the injection nozzle 1214 are opposite between the left cleaning disk 121L and the right cleaning disk 121R, and the rotation directions at the injection of the high-pressure water are opposite to each other. Further, since the cleaning disks 121L and 121R are rotated by the reaction force of injection of the high-pressure water from the injection nozzle 1214, they rotate in the directions opposite to the water flow.

As described above, the number of the cleaning disks 121 may be two or more (may be three, for example) and the suction port 182 may be configured to be disposed on a bisector that bisects a straight line connecting the centers of any two cleaning disks 121 on a bottom view. In this Embodiment, as shown in FIG. 14, the suction port 182 is disposed on a bisector SL2 that bisects a straight line SL1 connecting the centers of the adjacent cleaning disks 121L and 121R on a bottom view. With the configuration as above, by disposing the suction port 182 at an appropriate position by considering the rotation of the two cleaning disks 121L and 121R, the waste water can be suctioned efficiently.

It is to be noted that, in this Embodiment, the plurality of cleaning disks 121L and 121R are disposed close to each other in the left-right direction. Therefore, the suction port 182 is disposed on a tangent line of the plurality of cleaning disks 121L and 121R on a bottom view. Further, the disposition of the suction port 182 may be changed as appropriate and the disposition is not limited to the configuration of this Embodiment. The disposition of the suction port 182 may be designed as appropriate in accordance with the rotation direction of the cleaning disk 121 and a water amount of the high-pressure water.

In this Embodiment, as shown in FIG. 14, the suction port 182 is disposed on the side (rear side in the example shown in FIG. 14) to which the water flow generated by the injection of the high-pressure water is directed on the bisector SL2 with respect to the straight line SL1 on a bottom view. With the configuration as above, dirt generated by cleaning using the high-pressure water can be efficiently sent to the suction port 182 by the water flow. However, the above configuration is merely exemplification. The relationship between the suction port 182 and the direction of the water flow (the rotation direction of the cleaning disk 121) may be opposite to the configuration of this Embodiment. That is, the suction port 182 may be configured to be disposed on the side opposite to the direction in which the water flow generated by the injection of the high-pressure water is directed on the bisector SL2 with respect to the straight line SL1. In this case, too, the direction of the water flow is preferably opposite to that in the configuration shown in FIG. 14 so that the suction port 182 is disposed in the rear wall of the cover side-wall portion 18b.

FIG. 15 is a cross-sectional view of the cleaning-portion cover 18 shown in FIG. 13 cut along an XV-XV position. It is to be noted that FIG. 15 also shows the cleaning disk 121 and the roller 19 to facilitate understanding of the positional relationship between the cleaning-portion cover 18 and the other members.

As shown in FIGS. 13 and 15, the cover upper-wall portion 18a has a raised portion 18c that raises a height position of a part of an upper surface of the cleaning-portion cover 18. Specifically, the raised portion 18c is located at a center part in the left-right direction and a rear part of the cover upper-wall portion 18a. The cover side-wall portion 18b is disposed at a rear end of the raised portion 18c. The raised portion 18c has a raised-portion inner space 18d whose upper surface and side surfaces are surrounded by walls. The raised-portion inner space 18d is connected to a space below the raised portion 18c.

At least a part of the suction port 182 is disposed in a part constituting a side wall of the raised portion 18c in the cover side-wall portion 18b. The raised-portion inner space 18d is connected to the outside via the suction port 182. In this Embodiment, most of the suction port 182 is disposed in a part constituting the side wall of the raised portion 18c. The suction port 182 is disposed above the upper surface of the disk main-body 1211 of the cleaning disk 121. With the configuration as above, when waste water is suctioned into the suction port 182, a wide space can be positioned in front of the suction port 182. Therefore, the suction of the suction port 182 can be performed smoothly.

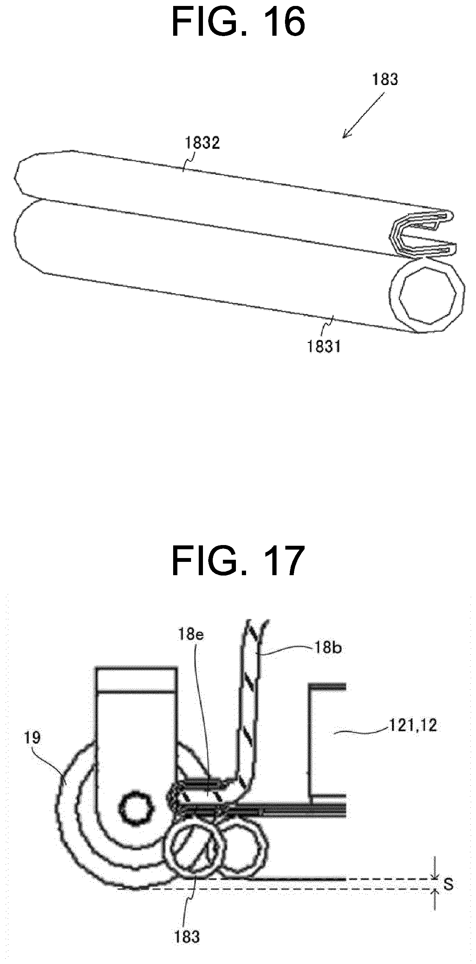

As shown in FIGS. 3 and 15, the cleaning-portion cover 18 has an elastic member 183 disposed at a lower end of the cover side-wall portion 18b. The elastic member 183 is made of, for example, rubber. FIG. 16 is a perspective view showing a schematic configuration of the elastic member 183 included in the cleaning-portion cover 18. As shown in FIG. 16, the elastic member 183 has a hollow main-body portion 1831 and a mounting portion 1832 having a C-shaped cross section and disposed on an upper part of the main-body portion 1831. The main-body portion 1831 and the mounting portion 1832 are a single member.

A flange portion 18e that protrudes in a direction facing an outside of the cleaning-portion cover 18 is provided on substantially the whole circumference of the lower end of the cover side-wall portion 18b (see also FIG. 13). The elastic member 183 is mounted on the lower end of the cleaning-portion cover 18 by the mounting portion 1832 sandwiching the flange portion 18e. According to this configuration, attachment and detachment of the elastic member 183 can be facilitated. The elastic member 183 is provided on substantially the whole circumference of the lower end of the cleaning-portion cover 18. It is to be noted that a flange portion may be provided on the whole circumference of the lower end of the cover side-wall portion 18b so as to have such a configuration that the elastic member 183 is provided on the whole circumference of the lower end of the cleaning-portion cover 18.

As shown in FIG. 15, in this Embodiment, the lower end of the cleaning portion 12 is at the same height position in the up-down direction as the lower end of the cover side-wall portion 18b. The elastic member 183 protrudes downward below the lower end of the cover side-wall portion 18b. Even if the elastic member 183 comes into contact with the cleaning target, a gap is generated between the cleaning target and the cleaning portion 12 due to presence of the elastic member 183 protruding downward below the cleaning portion 12. Therefore, the contact of the cleaning portion 12 with the cleaning target can be prevented.

FIG. 17 is an enlarged view of a portion surrounded by a broken line in FIG. 15. In this Embodiment, as shown in FIG. 17, the lower end of the roller 19 is located slightly below the lower end of the elastic member 183. Therefore, usually when the underwater cleaning-work apparatus 1 is brought close to the cleaning target by the driving of the front-rear thruster 112, the roller 19 first comes into contact with the cleaning target. As a result, a gap S is generated between the cleaning target and the cleaning-portion cover 18 (specifically, the elastic member 183).

In this Embodiment, it is configured such that an amount of water suctioned by the suction port 182 is larger than an injection amount of the high-pressure water. Therefore, a flow that draws water into the cleaning-portion cover 18 can be generated at the time of cleaning using the cleaning portion 12. By appropriately adjusting the gap S between the cleaning target and the cleaning-portion cover 18, a flow velocity at which the water flows from the outside to an inside of the cleaning-portion cover 18 can be increased so that a force that causes the underwater cleaning-work apparatus 1 to approach the cleaning target can be generated. By using the force, an output of the front-rear thruster 112 can be lowered.

It is to be noted that, when the cleaning target is curved, the cleaning target and the elastic member 183 may come into contact with each other regardless of the configuration that the lower end of the roller 19 is located slightly below the lower end of the elastic member 183. As described above, even in such a case, since the gap is generated between the cleaning target and the cleaning portion 12 due to the presence of the elastic member 183, contact of the cleaning portion 12 with the cleaning target can be prevented.

### [2-9. Others]

The underwater cleaning-work apparatus 1 may be configured to include neutral buoyancy so as not to float or sink under water, though not for a purpose of particular limitation. Further, the underwater cleaning-work apparatus 1 may be configured to be adjusted to a slightly sinking side from the neutral buoyancy. The buoyancy adjustment may be made by placing a foaming body at an appropriate place on the main-body portion 10. Further, the center of gravity of the underwater cleaning-work apparatus 1 may be set slightly lower than the center in the up-down direction of the main-body portion 10, though not for a purpose of particular limitation. With the configuration as above, the underwater cleaning-work apparatus 1 can be naturally directed to a posture in which the upper side is the main-body portion 10 and the lower side is the cleaning portion 12 under water.

### <3. NOTES AND THE LIKE>

Various technical features disclosed in this description can be changed in various ways without departing from the spirit of the technical creation thereof. Further, the plurality of embodiments and modifications described in this description may be combined to be worked to a possible extent.

### <4. SUPPLEMENT>

An exemplary underwater cleaning-work apparatus in this description may have such a configuration that includes a main-body portion, a cleaning portion which is disposed below the main-body portion, and a thruster disposed at a position shifted from the cleaning portion on a plan view (first configuration).

In the underwater cleaning-work apparatus having the above-described first configuration, it may be such a configuration that the thruster is disposed closer to an outer edge side than the cleaning portion (second configuration).

In the underwater cleaning-work apparatus having the first or second configuration, it may be such a configuration that the thruster is an up-down thruster that applies a propulsive force in the up-down direction, and a front-rear thruster that is disposed closer to the center than the up-down thruster and applies a propulsive force in a front-rear direction is provided (third configuration).

In the underwater cleaning-work apparatus having any one of the first to third configurations, it may be such a configuration that the main-body portion has a main frame on which the cleaning portion and the thruster are mounted (fourth configuration).

In the underwater cleaning-work apparatus having the third configuration, it may be such a configuration that the main-body portion has a main frame on which the cleaning portion, the up-down thruster, and the front-rear thruster are mounted (fifth configuration).

The underwater cleaning-work apparatus according to any one of the first to fifth configurations may have such a configuration that includes a bumper portion surrounding the main-body portion and the thruster (sixth configuration).

In the underwater cleaning-work apparatus according to the sixth configuration, it may be such a configuration that a roller that regulates a distance between the cleaning portion and the cleaning target is provided on the bumper portion (seventh configuration).

The underwater cleaning-work apparatus according to the fourth or fifth configuration may have such a configuration that includes a waterproof box mounted on the main frame and accommodating an electronic device (eighth configuration).

The underwater cleaning-work apparatus having the fourth or fifth configuration may have such a configuration that includes a camera attached to the main frame (ninth configuration).

### REFERENCE SIGNS LIST

- 1: underwater cleaning-work apparatus
- 11: thruster
- 12: cleaning portion
- 13: camera
- 16: waterproof box
- 17: bumper portion
- 19: roller
- 111: front-rear thruster
- 112: up-down thruster
- 1011: main frame

## Claims

1. An underwater cleaning-work apparatus, comprising:
a main-body portion;
a cleaning portion disposed below the main-body portion; and
a thruster disposed at a position shifted from the cleaning portion on a plan view.

2. The underwater cleaning-work apparatus according to claim 1, wherein the thruster is disposed closer to an outer edge side than the cleaning portion.

3. The underwater cleaning-work apparatus according to claim 1, wherein
the thruster is an up-down thruster that applies a propulsive force in an up-down direction; and
a front-rear thruster that is disposed closer to a center side than the up-down thruster and applies a propulsive force in a front-rear direction is provided.

4. The underwater cleaning-work apparatus according to claim 1, wherein the main-body portion has a main frame on which the cleaning portion and the thruster are mounted.

5. The underwater cleaning-work apparatus according to claim 3, wherein the main-body portion has a main frame on which the cleaning portion, the up-down thruster, and the front-rear thruster are mounted.

6. The underwater cleaning-work apparatus according to claim 1, further comprising: a bumper portion surrounding the main-body portion and the thruster.

7. The underwater cleaning-work apparatus according to claim 6, wherein a roller that regulates a distance between the cleaning portion and the cleaning target is provided on the bumper portion.

8. The underwater cleaning-work apparatus according to claim 4 or 5, further comprising: a waterproof box that is mounted on the main frame and accommodates an electronic device.

9. The underwater cleaning-work apparatus according to claim 4 or 5, further comprising a camera that is mounted on the main frame.
